# EUROPEAN PATENT SPECIFICATION

(11) **EP 0 453 011 B1**
(45) Date of publication and mention of the grant of the patent: **04.06.1997**
(21) Application number: 91200628.5
(22) Date of filing: 20.03.1991
(51) Int. Cl.: C08G 67/02

(54) **Preparation of polyketone polymers**
Herstellung von Polyketonen
Préparation de polycétones

(30) Priority: 06.04.1990 NL 9000812
(43) Date of publication of application: 23.10.1991
(73) Proprietor: SHELL INTERNATIONALE RESEARCH MAATSCHAPPIJ B.V., 2596 HR Den Haag (NL)
(72) Inventor: Mastenbroek, Barend, NL-1031 CM Amsterdam (NL); Petrus, Leonardus, NL-1031 CM Amsterdam (NL); De Smedt, Philip Jean Marie Maurice, NL-1031 CM Amsterdam (NL)

(56) References cited:
- EP-A- 0 305 011
- EP-A- 0 340 844
- EP-A- 0 412 620

## Description

The invention relates to a process for the preparation of polyketone polymers, i.e. polymers of carbon monoxide with one or more olefinically unsaturated compounds.

Linear polymers of carbon monoxide with one or more olefinically unsaturated compounds, in which polymers the units originating from carbon monoxide on the one hand and the units originating from the olefinically unsaturated compounds used on the other hand occur in a substantially alternating arrangement, can be prepared by contacting the monomers at an elevated temperature and pressure, in the presence of a diluent in which the polymers are insoluble or virtually insoluble, with a catalyst that suits the purpose. The preparation of the polymers can, in principle, be carried out in either of two manners, viz. batchwise or continuously.

Batchwise preparation of the polymers is carried out by introducing catalyst into a reactor containing diluent and monomers and which is at the desired temperature and pressure. As polymerization proceeds, the pressure drops, the concentration of the polymers in the diluent increases and the viscosity of the suspension rises. Polymerization is continued until the viscosity of the suspension has reached such a high value that continuing the process further would create difficulties in connection with heat removal. In principle, the only parameter which remains constant in batchwise polymer preparation is the temperature. A variant of batchwise polymer preparation is semi-batchwise preparation in which besides the temperature also the pressure is kept constant by adding monomers to the reactor during the polymerization.

In continuous polymer preparation, a diluent, monomers and catalyst are continuously added to a reactor containing monomers and a certain volume of the diluent and which is at the desired temperature and pressure, and a polymer suspension is continuously withdrawn from it. During the continuous polymer preparation, the temperature, the pressure and the liquid volume in the reactor are kept substantially constant. After a start-up period in which the polymer concentration in the suspension increases to the desired value, a stationary state is reached which is characterized, inter alia, by the suspension withdrawn from the reactor having a substantially constant polymer content and the polymers contained therein having substantially constant properties.

For the preparation of the polymers on an industrial scale, a continuous process is greatly to be preferred to batchwise or semi-batchwise production for the following reasons. In the first place, the continuous process gives a higher polymer output because the production does not, as in batchwise preparation, have to be frequently interrupted for charging and discharging the reactor. Since continuous operation, in contrast with batchwise production, is characterized by all the reaction parameters remaining substantially constant, a continuous process is easier to regulate and is more suited to automation. Finally, the continuous process produces polymers which exhibit less variation in properties and therefore have a more constant quality than those obtained from batchwise production.

One of the most important properties of the polymers in question is the bulk density. This plays an important role both in the preparation and in the treatment, storage, transport and processing of the polymers. As far as polymer preparation is concerned, the rule of thumb is that the maximum permissible suspension concentration, expressed in (kg polymer/kg suspension) x 100, is about one-tenth of the bulk density expressed in kg/m³. This means that, in the preparation of a polymer with a bulk density of 100 kg/m³, the maximum suspension concentration is about 10%, whereas in the preparation of a polymer with a bulk density of 500 kg/m³, the maximum suspension concentration is about 50%. This means that a quintupling of bulk density offers the possibility of preparing about five times the quantity of polymer in the same reactor volume. As far as polymer treatment, such as filtering, washing and drying, is concerned, the quantity of adhering liquid is largely determined by the polymer bulk density. Thus it has been found, for example, that a polymer with a bulk density of 100 kg/m³ binds approx. 5 kg diluent or washing liquid per kg, whereas that quantity is only about 0.25 kg for a polymer with a bulk density of 500 kg/m³. This is naturally of great importance on account of the quantity of liquid that must be used in washing the polymers and must be removed when the polymers are dried. As far as transport and storage are concerned, the rule is that the higher the polymers' bulk density, the more attractive the flow behaviour they will have and the less space they will occupy. As far as the processing of the polymers into shaped objects is concerned, it is often the case that polymers with low bulk density cause problems in the processing apparatus. Polymers with low bulk density must often be compacted, for example by extrusion, in order to make them suitable for further processing in the equipment usual for that purpose. The higher the polymers' bulk density, the less need there will be for prior treatment of the material, which will be suitable for further processing as it is.

It will be clear from the above that for the preparation of the polymers in question, interest is primarily directed at a continuous process and further at such a process in which polymers with a high bulk density are obtained.

As stated above, in the continuous preparation of the present polymers the stationary period is preceded by a start-up period. In contrast with the stationary period, during the start-up period both the polymer content of the suspension and the bulk density of the prepared polymers increase.

The applicant has carried out extensive research into the conditions which should be applied during the start-up period with a view to achieving the highest possible suspension concentration during the stationary period, as well as the highest possible bulk density of the polymers prepared during the stationary period. Initially, the route followed in an attempt to achieve this goal was to add to a reactor which contained monomers and diluent and was at a temperature and pressure selected for the stationary period the feed streams (monomers, catalyst and diluent) with the catalyst and diluent feed rates having values corresponding with those chosen for the stationary period (k and v respectively). The results of this start-up procedure were quite disappointing. Although after a relatively long start-up period a stationary state could be reached, characterized by a constant polymer content of the suspension discharged from the reactor, and a constant bulk density of the polymers present therein, both the suspension concentration and the bulk density were low. Attempts to improve the situation by application of a considerably higher catalyst rate than that previously used remained unsuccessful. Although a higher suspension concentration could be achieved in this way, the bulk density of the prepared polymers was very low. Moreover, the experiments conducted in this way had to be broken off at an early stage at a moment that the stationary state had not yet been reached in connection with extremely high viscosity of the suspension, so that stirring was no longer possible.

In the course of continued research into this subject, a start-up procedure was recently found that leads to a stationary state which is characterized both by a high suspension concentration and a high bulk density of the prepared polymers. The start-up procedure is carried out by adding the feed streams to a reactor containing monomers and diluent and which is at a temperature and pressure chosen for the stationary period. If during the stationary period the catalyst addition rate has a value k and the diluent addition rate has a value v, a catalyst addition rate should be employed at the start of the start-up period which is smaller than k and/or a diluent addition rate which is greater than v and the catalyst addition rate should be increased and/or the diluent addition rate should be reduced during the start-up period such that at the end of the start-up period they have the values k and v respectively.

A drawback of the above-described procedure is that it takes quite a long time before the stationary state is reached. After continued research a start-up procedure has now been found which, just like the previously mentioned one, leads to a stationary state which is characterized by both a high suspension concentration and a high bulk density of the prepared polymers, but which takes substantially less time. This start-up procedure is carried out by adding of the feed streams to a reactor containing monomers and diluent and which is at the temperature and pressure chosen for the stationary state and in which a solid material suspended in the diluent is present at the beginning of the start-up period.

The present patent application therefore relates to a process for the preparation of polymers, in which
a) linear polymers of carbon monoxide with one or more olefinically unsaturated compounds, in which polymers the units originating from carbon monoxide and the units originating from the olefinically unsaturated compound(s) occur in a substantially alternating order, are prepared by contacting the monomers at elevated temperature and pressure with a suitable catalyst,
b) the preparation is carried out continuously,
c) the start-up procedure is carried out by adding the feed streams to a reactor containing monomers and diluent and which is at the temperature and pressure chosen for the stationary period, and
d) at the beginning of the start-up period a solid material suspended in the diluent is present in the reactor.

In the process of the invention, a solid material suspended in the diluent should be present in the reactor at the beginning of the start-up period. Both organic and inorganic materials can be used for this purpose. Preferably, a polymer is used, and in particular an alternating polymer of carbon monoxide with one or more olefinically unsaturated compounds. For example, in the preparation of an alternating carbon monoxide/ethene/propene terpolymer, use can very suitably be made of a suspension in which an alternating carbon monoxide/ethene copolymer is present. More in particular, there is preference for the application of a suspension in which the polymer is not only alternating, but moreover as regards the composition substantially corresponds with the polymer to be prepared. For this reason, in the preparation of an alternating carbon monoxide/ethene/propene terpolymer according to the invention, use is preferably made of a suspension in which the polymer is also an alternating carbon monoxide/ethene/propene terpolymer. The concentration of the suspension which is present in the reactor at the beginning of the start-up period is preferably at least 12.5%.

As regards the catalyst addition rate employed during the start-up period, two variants were investigated and found suitable. Either the catalyst addition rate can be kept substantially constant during the whole start-up period at the value chosen for the stationary period or a higher catalyst addition rate can be used at the beginning of the start-up period and this can be reduced during the start-up period such that, by the end of the start-up period, it has substantially the value chosen for the stationary period.

As stated above, the suspension which according to the invention should be present in the reactor at the beginning of the start-up period is preferably a suspension of an alternating polymer of carbon monoxide with one or more olefinically unsaturated compounds, which suspension, moreover, preferably has a concentration of at least 12.5%. In view of the high viscosity which such suspensions generally have, their transport can cause problems. Such transport is necessary if the suspension is prepared batchwise in a separate reactor and then has to be transferred to a reactor in which the continuous preparation is to take place. Possible problems in the transport of the suspension will play a greater role as greater quantities of the suspension have to be transferred to the continuous reactor, for example if this form of implementation is chosen in the preparation of the present polymers on an industrial scale. The above-mentioned problems can be avoided by carrying out both the preparation of the polymer suspension needed for the start-up period and the continuous polymer preparation in the same reactor. The preparation of the required polymer suspension can very suitably be carried out batchwise, with the polymerization being continued until the suspension concentration desired for the start-up period is achieved. Preferably, the same catalyst is used for the batchwise preparation of the polymer suspension as is also subsequently used for the continuous polymer preparation. It is further preferable to employ substantially the same temperature and pressure during the batchwise preparation of the polymer suspension as that subsequently employed during the continuous polymer preparation. As regards the catalyst concentrations which can be used if the same catalyst is used for batchwise preparation of the polymer suspension and the continuous polymer preparation, three variants have been investigated and found suitable. Firstly, a lower catalyst concentration can be used for the batchwise preparation of the polymer suspension than subsequently for the continuous polymer preparation. It is also possible to use substantially the same catalyst concentration in both cases. Finally, the catalyst concentration can very suitably be varied during the batchwise preparation of the polymer suspension, this being done such that a catalyst concentration is used at the beginning of the batchwise polymerization which is lower than that needed for the continuous polymerization and that the catalyst concentration is raised during the batchwise polymerization to the value used for the continuous polymer preparation. For the batchwise preparation of the polymer suspension, preferably a small quantity of solid material is suspended in the diluent before the monomers are contacted with the catalyst. As regards the nature of the solid materials eligible for this purpose, reference is made to the previous remark with regard to the solid materials which can be present suspended in the diluent at the beginning of the start-up period. As was mentioned there, it also applies to the present case that there is particular preference for an alternating polymer that, as regards composition, corresponds substantially with the polymer to be prepared batchwise. If in the batchwise preparation of the polymer suspension use is made of a solid material suspended in the diluent, the concentration of the suspension present in the reactor at the beginning of the batchwise preparation is preferably at most 5%.

In the process of the invention, a catalyst is used which is capable of catalyzing the formation of the linear alternating polymers mentioned hereinbefore, starting from a mixture of carbon monoxide and one or more olefinically unsaturated compounds. Catalysts that are suitable for the present purpose are, inter alia, those which include a Group VIII metal. In this patent application, Group VIII metals are understood to be the noble metals ruthenium, rhodium, palladium, osmium, iridium and platinum, as well as the iron group metals iron, cobalt and nickel. Preference is given to catalysts which include palladium, nickel or cobalt as Group VIII metal. Special preference is given to palladium as the Group VIII metal. If the catalysts that are used in the process of the invention comprise a Group VIII metal, they are incorporated in the catalyst preferably in the form of a salt of a carboxylic acid, in particular in the form of an acetate. In addition to a Group VIII metal, the catalysts preferably include a dentate ligand in which at least two dentate groups occur, selected from phosphorus-containing, nitrogen-containing and sulphur-containing dentate groups, whereby the dentate ligand can complex with the Group VIII metal. Although dentate ligands containing more than two dentate groups are also eligible for this purpose, such as the tetradentate ligand 1,8-bis[bis(2-methoxyphenyl)phosphino]-2,7-bis[bis(2-methoxyphenyl) phosphinomethyl]octane, bidentate ligands are preferred. When a nitrogen bidentate ligand is used, preference is given to compounds of the general formula 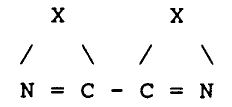 wherein X represents an organic bridging group containing three or four atoms in the bridge, at least two of which are carbon atoms, such as 2,2'-bipyridine and 1,10-phenanthroline. When use is made of a sulphur bidentate ligand, it is preferred to use compounds of the general formula R¹S-R-SR¹, wherein R¹ represents an optionally polar-substituted hydrocarbon group and R is a bivalent organic bridging group which has at least two carbon atoms in the bridge, such as 1,2-bis(ethylthio) ethane and cis-1,2-bis(benzylthio) ethene. Preference is given to the use of phosphorus bidentate ligands of the general formula (R¹)₂P-R-P(R¹)₂, wherein R and R¹ have the meanings given hereinbefore. Further it is preferred to use such phosphorus bidentate ligands in which R¹ represents an aromatic hydrocarbon group having at least one alkoxy substituent in the ortho position relative to the phosphorus atom to which it is bound. A compound which is very suitable for the present purpose is 1,3-bis[bis(2-methoxyphenyl)phosphino]propane. If a nitrogen or sulphur bidentate ligand is used in the catalysts, the applied quantity is preferably 0.5-100 and in particular 1-50 mol per mol of Group VIII metal. When a phosphorus bidentate ligand is used, the applied quantity is preferably 0.5-2 and in particular 0.75-1.5 mol per mol of Group VIII metal. In addition to a Group VIII metal and a phosphorus, nitrogen or sulphur bidentate ligand, the catalysts preferably include an anion of an acid with a pKa of less than 4 and in particular an anion of an acid with a pKa of less than 2. The anion can be introduced into the catalyst either in the form of a compound from which the desired anion splits off or in the form of a mixture of compounds from which the desired anion is formed by interaction. Both mineral acids and organic acids are eligible as acids with a pKa of less than 4. Examples of suitable mineral acids are sulphuric acid and perchloric acid. Examples of suitable organic acids are sulphonic acids such as para-toluenesulphonic acid and halogen carboxylic acids such as trifluoroacetic acid. The anion can be incorporated in the catalyst in the form of a carboxylic acid or in the form of a derivative thereof such as an alkyl or aryl ester, an amide, an imide, an anhydride, an ortho-ester, a lactone, a lactam or an alkylidene dicarboxylate. The anion is preferably present in the catalysts in a quantity of 1-100 and in particular 2-50 mol per mol of Group VIII metal. Apart from application as separate component, the anion of an acid with a pKa of less than 4 can also be present in the catalyst because, for example, palladium trifluoroacetate or palladium para-tosylate was used as Group VIII metal compound. In order to increase the activity of the Group VIII metal-containing catalysts, a 1,4-quinone may be additionally incorporated therein. For that purpose, 1,4-benzoquinone and 1,4-naphtho-quinone are very suitable. The quantity of 1,4-quinone used preferably amounts to 5-5,000 and in particular 10-1,000 mol per mol Group VIII metal.

Olefinically unsaturated compounds that can be polymerized with carbon monoxide by using the process of the invention can be compounds consisting exclusively of carbon and hydrogen as well as compounds which contain, in addition to carbon and hydrogen, one or more hetero-atoms. The process of the invention is preferably applied for the preparation of polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. The process of the invention is in particular very suitable for application in the preparation of copolymers of carbon monoxide with ethene and for the preparation of terpolymers of carbon monoxide with ethene and an α-olefin, in particular propene.

The quantity of catalyst composition employed in the process of the invention may vary within wide limits. Preferably, a quantity of catalyst composition is used which comprises 10⁻⁷-10⁻³ and in particular 10⁻⁶-10⁻⁴ mol of Group VIII metal per mol of olefinically unsaturated compound to be polymerized.

The contacting of the monomers with the catalyst is, in the process of the invention, carried out in the presence of a diluent in which the polymers are insoluble or virtually insoluble. Very suitable for this purpose are lower aliphatic alcohols and in particular methanol.

The process of the invention is preferably carried out in two or more reactors connected in series. If reactors connected in series are used, preferably not more than three reactors are used.

The process of the invention is preferably carried out at a temperature of 25-150°C and a pressure of 2-150 bar and in particular at a temperature of 30-130°C and a pressure of 5-100 bar. The molar ratio of olefinically unsaturated compounds relative to carbon monoxide is preferably 10:1-1:10 and in particular 5:1-1:5.

The invention will now be illustrated with the aid of six examples of the continuous preparation of carbon monoxide/ethene copolymers and carbon monoxide/ethene/-propene terpolymers. The examples were carried out in a reactor with a capacity of 150 l. The catalyst components were distributed over two solutions: Solution 1 contained 1000 mg palladium acetate per litre acetone, 2491 mg 1,3-bis[bis(2-methoxyphenyl)-phosphino]propane and 1067 mg trifluoroacetic acid. Solution 2 contained 3000 mg trifluoroacetic acid per litre acetone.

Unless stated otherwise, the suspension mass in the reactor was 70 kg.

### Example 1

Starting up in a reactor which contained monomers and polymer suspension and in which the feed rates chosen for the stationary period had been set from the start.
53 kg methanol and 20 kg of an alternating carbon monoxide/ethene copolymer with a bulk density of 380 kg/m³ were introduced into the reactor.

| | |
|---|---|
| Reactor pressure: | 45 bar |
| Reactor temperature: | 77°C |
| Gas phase composition: | 23 mol % carbon monoxide |
| | 54 mol % ethene |
| | 23 mol % propene |

The suspension mass in the reactor was 80 kg.
At run-hour zero the following rates were set:

| | |
|---|---|
| Methanol: | 5 kg/hour |
| Solution 1: | 37 ml/hour |
| Solution 2: | 25 ml/hour |

At run-hour 14 the polymer content of the suspension removed from the reactor was 15.5% and the bulk density of the polymers contained therein was 190 kg/m³.
At run-hour 28 the suspension concentration was 18.5% and the bulk density was 240 kg/m³.
At run-hour 45 the suspension concentration was 22% and the bulk density was 300 kg/m³. At run-hour 80 the same values were found for the suspension concentration and the bulk density.

### Example 2

Starting up in a reactor which contained monomers and polymer suspension, initially with a high catalyst feed rate, after which the rate was reduced to the value chosen for the stationary period.

53 kg methanol and 20 kg of an alternating carbon monoxide/ethene copolymer with a bulk density of 380 kg/m³ were introduced into the reactor.

| | |
|---|---|
| Reactor pressure: | 45 bar |
| Reactor temperature: | 77°C |
| Gas phase composition: | 23 mol % carbon monoxide |
| | 54 mol % ethene |
| | 23 mol % propene |

The suspension mass in the reactor was 80 kg.
At run-hour zero the following rates were set:

| | |
|---|---|
| Methanol: | 5 kg/hour |
| Solution 1: | 100 ml/hour |
| Solution 2: | 68 ml/hour |

At run-hour 5 the polymer content of the suspension removed from the reactor was 24% and the bulk density of the polymers contained therein was 350 kg/m³. At run-hour 5 the feed rates of solutions 1 and 2 were reduced, the reduction being to 25 ml/hour for solution 2.

At run-hour 10 the suspension concentration was 22% and the bulk density was 300 kg/m³. At run-hour 45 the same values were found for the suspension concentration and the bulk density.

### Example 3

Starting up in a reactor which contained monomers and polymer suspension, initially with a high catalyst feed rate, after which the rate was reduced to the value chosen for the stationary period.
The polymer suspension present in the reactor at the start of the starting-up period had been prepared batchwise in this reactor using a catalyst concentration which was lower than that chosen for the stationary period of the continuous part of the polymer preparation. At the switch-over from the batchwise part of the polymer preparation to the continuous part a high catalyst feed rate was applied, after which this was reduced to the valued chosen for the stationary period.

50 kg methanol and 1 kg of an alternating carbon monoxide/ethene/propene terpolymer were introduced into the reactor.

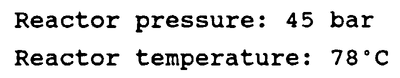

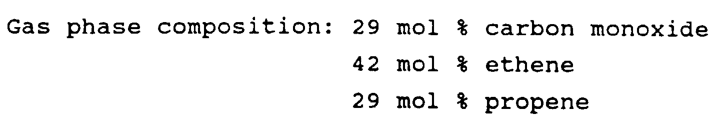

At run-hour zero 211 ml of solution 1 and 282 ml of solution 2 were introduced into the reactor. During the polymerization the pressure was maintained at 45 bar by forcing in a 1:1 carbon monoxide/ethene mixture. The batchwise polymer preparation was carried out for 22 hours.
At run-hour 18 the polymer content of the suspension amounted to 21% and the bulk density of the polymers contained therein was 360 kg/m³.
At run-hour 22 the process was switched over to continuous polymer preparation.

At run-hour 22 the following feed rates were set:

| | |
|---|---|
| Methanol: | 3.5 kg/hour |
| Solution 1: | 100 ml/hour |
| Solution 2: | 68 ml/hour |

At run-hour 25 the suspension concentration was 23% and the bulk density was 350 kg/m³. At run-hour 25 the feed rates of solutions 1 and 2 were reduced to 26 ml/hour for solution 1 and 17 ml/hour for solution 2.

At run-hour 40 the suspension concentration was 23% and the bulk density was 260 kg/m³. At run-hour 80 the same values were found for the suspension concentration and the bulk density.

### Example 4

Starting up in a reactor which contained monomers and polymer suspension and where the catalyst feed rate chosen for the stationary period was set from the beginning. The polymer suspension present in the reactor at the start of the starting-up period had been prepared batchwise in this reactor using the same catalyst concentration as that chosen for the continuous polymer preparation.

50 kg methanol and 0.5 kg of an alternating carbon monoxide/ethene/propene terpolymer were introduced into the reactor.

| | |
|---|---|
| Reactor pressure: | 45 bar |
| Reactor temperature: | 77°C |
| Gas phase composition: | 29 mol % carbon monoxide |
| | 42 mol % ethene |
| | 29 mol % propene |

At run-hour zero 369 ml of solution 1 and 244 ml of solution 2 were introduced into the reactor. During the polymerization the pressure was maintained at 45 bar by forcing in a 1:1 carbon monoxide/ethene mixture. The batchwise polymer preparation was carried out for 14 hours. At run-hour 10 the polymer content of the suspension amounted to 13% and the bulk density of the polymers contained therein was 300 kg/m³.
At run-hour 14 the process was switched over to continuous polymer preparation.
At run-hour 14 the following feed rates were set:

| | |
|---|---|
| Methanol: | 3.5 kg/hour |
| Solution 1: | 26 ml/hour |
| Solution 2: | 17 ml/hour |

At run-hour 30 the suspension concentration was 21% and the bulk density was 240 kg/m³.

At run-hour 40 the suspension concentration was 23% and the bulk density was 260 kg/m³. At run-hour 80 the same values were found for the suspension concentration and the bulk density.

### Example 5

Starting up in a reactor which contained monomers and polymer suspension and where the catalyst feed rate chosen for the stationary period was set from the beginning. The polymer suspension present in the reactor at the start of the starting-up period had been prepared batchwise in this reactor using the same catalyst concentration as that chosen for the continuous polymer preparation. In the switch-over from the batchwise part of the polymer preparation to the continuous part, the gas phase composition was changed.

55 kg methanol and 1.0 kg of an alternating carbon monoxide/ethene/propene terpolymer were introduced into the reactor.

| | |
|---|---|
| Reactor pressure: | 45 bar |
| Reactor temperature: | 93°C |
| Gas phase composition: | 67 mol % carbon monoxide |
| | 33 mol % ethene |

At run-hour zero 93 ml of solution 1 and 124 ml of solution 2 were introduced into the reactor. During the polymerization the pressure was maintained at 45 bar by forcing in a 1:1 carbon monoxide/ethene mixture. The batchwise polymer preparation was carried out for 22 hours. At run-hour 18 the polymer content of the suspension amounted to 18.5% and the bulk density of the polymers contained therein was 230 kg/m³.

At run-hour 22 the process was switched over to continuous polymer preparation. At run-hour 22 the following feed rates were set:

| | |
|---|---|
| Methanol: | 3.5 kg/hour |
| Solution 1: | 6 ml/hour |
| Solution 2: | 4 ml/hour |

Moreover, from run-hour 22 the gas phase composition was changed in 4 hours to 33 mol % carbon monoxide and 67 mol % ethene.

At run-hour 26 the suspension concentration was 21% and the bulk density was 250 kg/m³. At run-hour 80 the same values were found for the suspension concentration and the bulk density.

### Example 6

Starting up in a reactor which contained monomers and polymer suspension and where the catalyst feed rate chosen for the stationary period was set from the beginning. The polymer suspension present in the reactor at the start of the starting-up period had been prepared batchwise in this reactor, the catalyst concentration being raised in the mean time to the value chosen for the continuous preparation.

48 kg methanol and 1.0 kg of an alternating carbon monoxide/ethene/propene terpolymer were introduced into the reactor.

| | |
|---|---|
| Reactor pressure: | 45 bar |
| Reactor temperature: | 78°C |
| Gas phase composition: | 24 mol % carbon monoxide |
| | 54 mol % ethene |
| | 20 mol % propene |

At run-hour zero 127 ml of solution 1 and 169 ml of solution 2 were introduced into the reactor. During the polymerization the pressure was maintained at 45 bar by forcing in a 1:1 carbon monoxide/ethene mixture.
At run-hour 11 the polymer content of the suspension amounted to 9.5% and the bulk density of the polymers contained therein was 170 kg/m³.

At run-hour 15 151 ml of solution 1 and 203 ml of solution 2 were introduced into the reactor. At run-hour 18 the polymer content of the suspension amounted to 19% and the bulk density of the polymers contained therein was 250 kg/m³.
At run-hour 22 the process was switched over to continuous polymer preparation.
At run-hour 22 the following feed rates were set:

| | |
|---|---|
| Methanol: | 3.5 kg/hour |
| Solution 1: | 20 ml/hour |
| Solution 2: | 14 ml/hour |

At run-hour 30 the suspension concentration was 24% and the bulk density was 280 kg/m³.

At run-hour 40 the suspension concentration was 25% and the bulk density was 280 kg/m³. At run-hour 80 the same values were found for the suspension concentration and the bulk density.

Examples 1-6 are all according to the invention. In these examples carbon monoxide/ethene copolymers and carbon monoxide/ethene/propene terpolymers were prepared in continuous manner using a starting-up procedure whereby a polymer suspension was already present in the reactor at the beginning. In this way polymers with a bulk density of 250-300 kg/m³ could be prepared during the stationary period of the continuous process at a suspension concentration of 20-25%.

It was established by ¹³C-NMR analysis that the carbon monoxide/ethene copolymers prepared according to example 5 and the carbon monoxide/ethene/propene terpolymers prepared according to examples 1-4 and 6 consisted of linear chains in which on the one hand the units from carbon monoxide and on the other hand the units from ethene or from ethene and propene occurred in an alternating arrangement. In the terpolymer chains the units from ethene and propene occurred in a randomly distributed manner.

## Claims

1. Process for the preparation of polyketone polymers, in which
a) linear polymers of carbon monoxide with one or more olefinically unsaturated compounds, in which polymers the units originating from carbon monoxide and the units originating from the olefinically unsaturated compound(s) occur in a substantially alternating order, are prepared by contacting the monomers at elevated temperature and pressure, in the presence of a diluent in which the polymers are insoluble or virtually insoluble, with a suitable catalyst,
b) the preparation is carried out continuously, and
c) the start-up procedure is carried out by adding the feed streams into a reactor containing monomers and diluent and which is at the temperature and pressure chosen for the stationary period, characterized in that
d) a solid material suspended in the diluent is present in the reactor at the beginning of the start-up period.

2. Process according to claim 1, characterized in that the solid material which at the beginning of the start-up period is present in the reactor suspended in the diluent is an alternating polymer of carbon monoxide with one or more olefinically unsaturated compounds.

3. Process according to claim 1 or 2, characterized in that the concentration of the suspension in the reactor at the beginning of the start-up period amounts to at least 12.5%.

4. Process according to any of claims 1-3, characterized in that during the whole start-up period the catalyst feed rate is kept substantially constant at the value chosen for the stationary period.

5. Process according to any of claims 1-3, characterized in that at the beginning of the start-up period a catalyst feed rate is employed which is higher than that chosen for the stationary period and that this rate is reduced during the start-up period such that at the end of the start-up period it has substantially the value chosen for the stationary period.

6. Process according to any of claims 2-5, characterized in that both the preparation of the polymer suspension needed for the the start-up period and the continuous polymer preparation are carried out in the same reactor, where the preparation of the required polymer suspension is carried out batchwise, and is continued until the suspension concentration required for the start-up period is reached.

7. Process according to claim 6, characterized in that the batchwise polymer preparation and the continuous polymer preparation are carried out at substantially the same temperature and pressure, and use the same catalyst.

8. Process according to claim 7, characterized in that at the start of the batchwise polymer preparation a catalyst concentration is employed which is lower than that for the continuous polymer preparation and that during the batchwise polymer preparation the catalyst concentration is raised to the value employed for the continuous polymer preparation.

9. Process according to any of claims 6-8, characterized in that a small quantity of solid material is suspended in the diluent before the monomers are contacted with the catalyst, so that the concentration of the suspension present in the reactor at the beginning of the batchwise preparation is at most 5%.

10. Process according to any of claims 1-9, characterized in that the catalyst contains a Group VIII metal, and a dentate ligand in which at least two dentate groups occur, chosen from phosphorus-, nitrogen- and sulphur-containing dentate groups, so that the dentate ligand can complex with the Group VIII metal, and optionally also an anion of an acid with a pKa of less than 4.

11. Process according to one or more of claims 1-10, characterized in that it is carried out in two or more reactors connected in series.

## Patentansprüche

1. Verfahren zur Herstellung von Polyketonen, bei dem man
a) durch Inberührungbringen der Monomere bei erhöhter Temperatur und erhöhtem Druck in Gegenwart eines Verdünnungsmittels, in dem die Polymere unlöslich oder praktisch unlöslich sind, mit einem geeigneten Katalysator lineare Polymere aus Kohlenmonoxid und einer oder mehreren olefinisch ungesättigten Verbindungen herstellt, wobei in den Polymeren die vom Kohlenmonoxid stammenden Einheiten und die von der bzw. den olefinisch ungesättigten Verbindung(en) stammenden Einheiten in weitgehend alternierender Reihenfolge auftreten,
b) die Herstellung kontinuierlich durchführt und
c) das Anfahren so durchführt, daß man die Einsatzströme einem Reaktor zusetzt, der Monomere und Verdünnungsmittel enthält und der sich bei der für die stationäre Phase gewählten Temperatur und dem für die stationäre Phase gewählten Druck befindet, dadurch gekennzeichnet, daß man
d) zu Beginn des Anfahrens im Reaktor einen in dem Verdünnungsmittel suspendierten Feststoff vorlegt.

2. Verfahren nach Anspruch 1, dadurch gekennzeichnet, daß man zu Beginn der Anfahrphase im Reaktor als in dem Verdünnungsmittel suspendierten Feststoff ein alternierendes Polymer aus Kohlenmonoxid und einer oder mehreren definisch ungesättigten Verbindungen vorlegt.

3. Verfahren nach Anspruch 1 oder 2, dadurch gekennzeichnet, daß man die Konzentration der Suspension im Reaktor zu Beginn der Anfahrphase auf mindestens 12,5% einstellt.

4. Verfahren nach einem der Ansprüche 1-3, dadurch gekennzeichnet, daß man während der gesamten Anfahrphase die Katalysatorzusatzrate im wesentlichen konstant bei dem für die stationäre Phase gewählten Wert hält.

5. Verfahren nach einem der Ansprüche 1-3, dadurch gekennzeichnet, daß man zu Beginn der Anfahrphase eine Katalysatorzusatzrate einstellt, die höher ist als die für die stationäre Phase gewählte, und daß man diese Rate während der Anfahrphase so verringert, daß sie am Ende der Anfahrphase im wesentlichen den für die stationäre Phase gewählten Wert hat.

6. Verfahren nach einem der Ansprüche 2-5, dadurch gekennzeichnet, daß man sowohl die Herstellung der für die Anfahrphase benötigten Polymersuspension als auch die kontinuierliche Polymerherstellung im gleichen Reaktor durchführt, wobei man die Herstellung der erforderlichen Polymersuspension diskontinuierlich durchführt und so lange fortsetzt, bis die für die Anfahrphase erforderliche Suspensionskonzentration erreicht ist.

7. Verfahren nach Anspruch 6, dadurch gekennzeichnet, daß man die diskontinuierliche Polymerherstellung und die kontinuierliche Polymerherstellung bei im wesentlichen gleicher Temperatur und gleichem Druck und unter Verwendung des gleichen Katalysators durchführt.

8. Verfahren nach Anspruch 7, dadurch gekennzeichnet, daß man zu Beginn der diskontinuierlichen Polymerherstellung den Katalysator in einer Konzentration einsetzt, die niedriger ist als die für die kontinuierliche Polymerherstellung, und daß man während der diskontinuierlichen Polymerherstellung die Katalysatorkonzentration auf den Wert für die kontinuierliche Polymerherstellung erhöht.

9. Verfahren nach einem der Ansprüche 6-8, dadurch gekennzeichnet, daß man vor dem Inberührungbringen der Monomere mit dem Katalysator eine geringe Menge Feststoff in dem Verdünnungsmittel suspendiert, so daß die Konzentration der im Reaktor vorliegenden Suspension zu Beginn der diskontinuierlichen Herstellung höchstens 5% beträgt.

10. Verfahren nach einem der Ansprüche 1-9, dadurch gekennzeichnet, daß man einen Katalysator einsetzt, der ein Metall der Gruppe VIII und einen zähnigen Liganden, in dem mindestens zwei zähnige, aus phosphor-, stickstoff- und schwefelhaltigen zähnigen Gruppen ausgewählte Gruppen vorliegen, wodurch der zähnige Ligand mit dem Metall der Gruppe VIII einen Komplex bilden kann, sowie gegebenenfalls ein Anion einer Säure mit einem pKa-Wert kleiner 4 enthält.

11. Verfahren nach einem oder mehreren der Ansprüche 1-10, dadurch gekennzeichnet, daß man es in zwei oder mehr hintereinandergeschalteten Reaktoren durchführt.

## Revendications

1. Procédé de préparation de polymères, conformément auquel
a) on prépare des polymères linéaires du monoxyde de carbone avec un ou plusieurs composés à insaturation oléfinique, polymères dans lesquels les unités qui tirent leur origine du monoxyde de carbone et les unités provenant du ou des composés à insaturation oléfinique, se présentent en un ordre sensiblement alternant, par la mise en contact des monomères, à température et pression élevées avec un catalyseur approprié,
b) on entreprend la préparation en continu,
c) on entreprend le processus de démarrage en introduisant les courants d'alimentation dans un réacteur contenant monomères et diluant et qui se trouve à la température et à la pression choisies, pour la période stationnaire et
d) au début de la période de démarrage, une matière solide en suspension dans le diluant est présente dans le réacteur.

2. Procédé suivant la revendication 1, caractérisé en ce que la matière solide qui est présente dans le réacteur, au commencement de la période de démarrage, en suspension dans le diluant est un polymère alternant du monoxyde de carbone et d'un ou plusieurs composés oléfiniquement insaturés.

3. Procédé suivant la revendication 1 ou 2, caractérisé en ce que la concentration de la suspension dans le réacteur, au commencement de la période de démarrage s'élève à au moins 12,5%.

4. Procédé suivant l'une quelconque des revendications 1 à 3, caractérisé en ce qu'au cours de la période de démarrage totale, on maintient sensiblement constant le taux d'alimentation, à la valeur choisie pour la période stationnaire.

5. Procédé suivant l'une quelconque des revendications 1 à 3, caractérisé en ce que, au commencement de la période de démarrage, on utilise un taux d'alimentation en catalyseur qui est plus élevé que celui choisi pour la période stationnaire et en ce que l'on réduit ce taux, au cours de la période de démarrage, en sorte que, à la fin de la période de démarrage, il ait sensiblement la valeur choisie pour la période stationnaire.

6. Procédé suivant l'une quelconque des revendications 2 à 5, caractérisé en ce que l'on entreprend tant la préparation de la suspension de polymère nécessaire pour la période de démarrage que la préparation continue du polymère, dans le même réacteur, où l'on entreprend la préparation de la suspension de polymère requise, de manière discontinue et on la continue, jusqu'à ce que la concentration de la suspension requise pour la période de démarrage soit atteinte.

7. Procédé suivant la revendication 6, caractérisé en ce que l'on entreprend la préparation discontinue du polymère et la préparation continue du polymère, à sensiblement la même température et la même pression et on utilise le même catalyseur.

8. Procédé suivant la revendication 7, caractérisé en ce que, au départ de la préparation discontinue du polymère, on utilise une concentration de catalyseur qui est plus faible que celle utilisée pour la préparation continue du polymère et, au cours de la préparation discontinue du polymère, on élève la concentration du catalyseur, jusqu'à la valeur utilisée pour la préparation continue du polymère.

9. Procédé suivant l'une quelconque des revendications 6 à 8, caractérisé en ce qu'une petite quantité de matière solide est mise en suspension dans le diluant, avant de mettre les monomères en contact avec le catalyseur, en sorte que la concentration de la suspension présente dans le réacteur, au commencement de la préparation discontinue soit d'au maximum 5%.

10. Procédé suivant l'une quelconque des revendications 1 à 9, caractérisé en ce que le catalyseur contient un métal du groupe VIII et un ligand dentate, dans lequel au moins deux radicaux dentates sont présents, choisis parmi les radicaux dentates contenant du phosphore, de l'azote et du soufre, en sorte que le ligand dentate puisse se complexer au métal du groupe VIII et éventuellement aussi un anion d'un acide qui possède un pKa inférieur à 4.

11. Procédé suivant l'une quelconque des revendications 1 à 10, caractérisé en ce qu'on l'entreprend dans deux ou plus de deux réacteurs, raccordés en série.
